(19) **Europäisches Patentamt**

**European Patent Office**

**Office européen des brevets**

(11) **EP 1 464 982 A2**

(12) **EUROPÄISCHE PATENTANMELDUNG**

(43) Veröffentlichungstag:
06.10.2004 Patentblatt 2004/41

(51) Int Cl.[7]: **G01S 7/35**, G01S 7/40,
G01S 13/34

(21) Anmeldenummer: 04003829.1

(22) Anmeldetag: **20.02.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **02.04.2003 DE 10315012**

(71) Anmelder: **EADS Deutschland GmbH**
**85521 Ottobrunn (DE)**

(72) Erfinder:
• **Kliewer, Jörg, Dr.**
 **24105 Kiel (DE)**
• **Weiss, Georg**
 **88110 Kipfenberg (DE)**

(74) Vertreter: **Meel, Thomas, Patentassessor**
 **c/o Dornier GmbH**
 **FCL6**
 **88039 Friedrichshafen (DE)**

(54) **Verfahren zur Linearisierung von FMCW-Radargeräten**

(57) Die Erfindung betrifft Verfahren zur Linearisierung von frequenzmodulierten Dauerstrich-(FMCW-) Radargeräten mit nichtlinearem rampenförmig moduliertem Sendefrequenzverlauf x(t). Gemäß der Erfindung wird im FMCW-Radargerät empfängerseitig ein Korrekturphasenterm zur Kompensation des Phasenfehlers im Empfangssignal q(t) berechnet.

**Fig. 3**

## Beschreibung

Die Erfindung betrifft ein Verfahren zur Linearisierung von FMCW-Radargeräten gemäß dem Oberbegriff des Patentanspruchs 1.

Bei FMCW- (frequency modulated continous wave-) Radargeräten kommt es, bedingt durch den nicht streng linearen Anstieg der Sendefrequenz eines FMCW-Radargeräts zu Phasenfehlern im Empfangssignal. Dadurch kommt es zu einem Genauigkeitsverlust bei der Signalauswertung.

Zur Linearisierung eines FMCW-Radargeräts sind verschiedene Verfahren bekannt.

In einem bekannten Verfahren wird beispielsweise ein verzögertes Sendesignal mittels einer optischen Verzögerungsleitung mit definierter Laufzeit erzeugt. Dieses verzögerte Sendesignal wird mit dem unverzögerten Sendesignal gemischt. Hieraus lässt sich die Abweichung von der idealen linearen Kennlinie ermitteln. Nachteile dieses Verfahrens sind der hohe bauliche Aufwand und die altersbedingte Eintrübung der optischen Komponenten.

Es ist weiterhin bekannt mittels eines Digital Direct Synthesis (DDS-) Systems eine vorgebbare Signalfunktion, z.B. eine lineare Kennlinie exakt zu generieren. Ein Nachteil dieses Systems ist allerdings der hohe bauliche und kostenintensive Aufbau.

Aus DE 41 04 792 A1 ist ein FMCW-Radarsystem mit linearer Frequenzmodulation bekannt. Bei diesem System ist ein Oszillator vorhanden, welcher ein rampenförmige moduliertes Signal mit einer modulierten Oszillatorfrequenz erzeugt, welches von einer Antenne abgestrahlt wird. In einer Kontroll- und Steuereinheit wird mittels einer Hilbert-Transformation die Abweichung der gemessenen modulierten Oszillatorfrequenz eines von einem Objekt reflektierten Signals von einem linearisierten Sollwert bestimmt. Aus der bestimmten Abweichung lässt sich eine Phasenabweichung bestimmen, mittels der ein Korrektursignal erzeugt wird, welches dem Oszillator zugeführt wird, wodurch die Oszillatorfrequenz entsprechend den vorgegebenen Sollwerten geändert wird. Ein Nachteil dieses System ist der hohe bauliche und kostenintensive Aufwand, da zusätzliche Komponenten benötigt werden.

Aufgabe der Erfindung ist es, ein Verfahren anzugeben, mit dem ein FMCW-Radargerät ohne großen baulichen Aufwand linearisiert werden kann.

Die Aufgabe wird mit dem Verfahren gemäß dem Patentanspruch 1 gelöst. Vorteilhafte Ausführungen der Erfindung sind Gegenstand von Unteransprüchen.

Erfindungsgemäß wird im FMCW-Radargerät empfängerseitig ein Korrekturphasenterm zur Kompensation des Phasenfehlers im Empfangssignal q(t) berechnet. Im Gegensatz zu bekannten Verfahren werden mit dem erfindungsgemäßen Verfahren keine aufwendigen Bauteile im Sendezweig des FMCW-Radargeräts benötigt, was sich kostenmindernd auswirkt.

Vorteilhaft umfasst das erfindungsgemäße Verfahren folgende Verfahrensschritte:

- Auswählen einer vorgebbaren Anzahl L aufeinanderfolgender rampenförmiger Empfangsfolgen $q_k(n)$ des Empfangssignals mit k=1,...,L, deren Phasen $\arg\{q_k(n)\}$ jeweils als Polynom N-ter Ordnung für den Zeitindex n mit den Polynomkoeffizienten $m_\ell$ mit $\ell=1,...,N$ darstellbar sind,
- Transformieren eines jeweils vorgebbaren Spektralbereichs $Q(e^{j\Omega})$ der ausgewählten Empfangsfolgen q(n) in ein vorgebbares Basisband, wobei jeweils Basisband-Empfangsfolgen $\tilde{q}_k(n)$ mit k=0,...,L-1 erzeugt werden,
- iterative Berechnung eines Korrekturphasenterms zur Teilkompensation von nichtlinearen Frequenzanteilen in den Basisband-Empfangsfolgen $\tilde{q}_k(n)$ durch Berechnung der Polynomkoeffizienten $\tilde{m}_\ell^{\,\varrho}$ der einzelnen Basisband-Empfangsfolgen $\tilde{q}_k(n)$ mittels Schätzverfahren, wobei $\tilde{q}_k(n)$ die bereits iterativ phasenkorrigierten Folgen sind und wobei die Iteration abgebrochen wird, wenn eine vorgebbare Parameteränderung zwischen zwei aufeinanderfolgenden Iterationen unter einer vorgebbaren Schwelle ε bleibt.

In einer vorteilhaften Ausführung der Erfindung wird in einem Verfahrensschritt nach der Basisbandtransformation der Abtasttakt $T_A$ der Rampensignale reduziert. Dazu wird eine vorherige Antialias-Tiefpassfilterung der Rampensignale $q_k(n)$ durchgeführt. Der Faktor K, um den der Abtasttakt $T_A$ reduziert wird, liegt vorteilhaft zwischen K=30 und K=60.

Im Gegensatz zu einer aktivien Linearisierung der Frequenzmodulation des Radar-Sendesignals wird bei dem erfindungsgemäßen Verfahren die Linearisierung empfängerseitig mittels digitaler Verarbeitung des Empfangssignals durchgeführt. Somit sind für das erfindungsgemäße Verfahren keine zusätzlichen Komponenten nötig. Die für das erfindungsgemäße Verfahren notwendigen Berechnungen können von den bereits vorhandenen Komponenten zur Signalauswertung durchgeführt werden. Hieraus ergeben sich weitere Vorteile hinsichtlich der Herstellungskosten.

Ein weiterer Vorteil der Erfindung ist, dass das Schätzverfahren aufwandsarm realisiert werden kann, da das Empfangssignal im Basisband verarbeitet wird, woduch eine Reduktion des Abtasttakts $T_A$ um einen Faktor K zwischen 30 und 60 möglich ist. Ein weiterer Vorteil des erfindungsgemäßen Verfahrens ist eine Berechnung der Polynomkoeffizienten mittels robuster Schätzverfahren auch bei stark gestörten Kanälen. So ist mit dem erfindungsgemäßen Verfahren eine gute Kompensation von Phasenfehlern bei Signal-zu-Rauschverhältnissen (SNR) von bis zu -20dB möglich. Somit kann das Verfahren außer im Zivilbereich auch im militärischen Bereich, z.B. bei der Entfernungsmessung eingesetzt werden.

Die Erfindung sowie weitere vorteilhafte Ausführungen des erfindungsgemäßen Verfahrens werden anhand von Zeichnungen näher erläutert. Es zeigen:

Fig. 1 ein beispielhaftes idealisiertes rampenförmiges FMCW-Sendesignal,

Fig. 2 beispielhafte Darstellung der Reflexion des Radarsignals an einem punktförmigen Objekt im Abstand R,

Fig. 3 ein Blockdiagramm des erfindungsgemäßen Verfahrens,

Fig. 4 eine Darstellung einer Basisbandverschiebung eines ausgewählten Spektralbereichs im Empfangssignal,

Fig. 5a eine beispielhafte Darstellung eines Betragsspektrums eines taktreduzierten Basisbandsignals vor und nach der Bandpassfilterung,

Fig. 5b eine beispielhafte Darstellung eines Betragsspektrums eines Radar-Empfangssignals vor und nach der erfindungsgemäßen Phasenkorrektur.

Ausgangspunkt ist das Sendesignal eines FMCW-Radars, das mit einem allgemeinen Polynomansatz N-ter Ordnung für eine Senderampe als

$$x(t) = \exp\left\{ j2\pi \left( f_0 t + \frac{m_1}{2} t^2 + \frac{m_2}{3} t^3 + \frac{m_2}{4} t^4 + \ldots + \gamma_0 \right) \right\} \qquad (1)$$

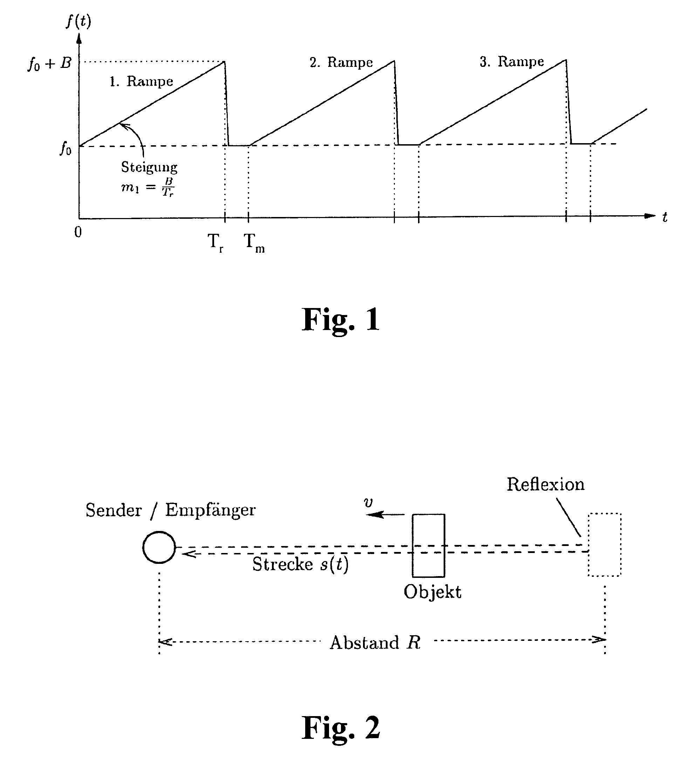

mit $t \in [0, T_r]$ beschrieben werden kann. Dabei stellen die Koeffizienten $m_\ell$ mit $\ell = 2, \ldots, N$, die zu suchenden Polynomparameter, $\gamma_0$ eine Anfangsphase und $T_r$ die Zeitdauer einer Senderampe dar. Der als gegeben vorausgesetzte Parameter $m_1$ bezeichnet den - idealerweise ausschließlich vorhandenen - bekannten linearen Anteil $m_1 = B/t$, wobei B den Frequenzhub des FMCW-Radarsystems beschreibt. Im Folgenden wird ein einziges reflektierendes punktförmiges Objekt angenommen. Die entsprechenden Parameter sind in Fig.1 am Beispiel eines idealisierten Sendesignals dargestellt. Mit Gleichung (1) lautet das Empfangssignal im idealen rauschfreien Fall dann

$$y(t) = \exp\left\{ j2\pi \left( f_0 t + \frac{m_1}{2} t^2 + \frac{m_2}{3} t^3 + \frac{m_2}{4} t^4 + \ldots + \gamma_0 - \frac{s(t)}{\lambda(t)} \right) \right\} \qquad (2)$$

Da eine mögliche Anwendung des beschriebenen Verfahrens die Ermittlung von Relativabständen zwischen Objekten darstellt, die sich mit annähernd gleicher Geschwindigkeit relativ zum Radarsensor bewegen, kann im weiteren s(t)=2R angenommen werden (Fig. 2).

Für die momentane Wellenlänge λ(t) ergibt sich mit der Lichtgeschwindigkeit c

$$\frac{1}{\lambda(t)} = \frac{f(t)}{c} = \frac{1}{c}\left( f_0 + \sum_{\ell=1}^{N} m_\ell t^\ell \right) \quad mit \quad f(t) = \frac{1}{2\pi} \frac{d \arg\{x(t)\}}{dt} = f_0 + \sum_{\ell=1}^{N} m_\ell t^\ell$$

Das Empfangssignal y(t) kann vorteilhaft in eine niedrigere Frequenzlage abgemischt werden. Das abgemischte Empfangssignal $q_e$(t) ergibt sich aus den Gleichungen (1) und (2) wie folgt:

$$q_e(t) = y(t) \cdot x^*(t) = \exp\left\{ -j \frac{4\pi R}{c} \left( f_0 + \sum_{\ell=1}^{N} m_\ell t^\ell \right) \right\} \qquad (3)$$

Beschreibt $q_e(t)$ eine harmonische Exponentialfunktion, d.h. ist $m_\ell=0$ mit $\ell=2,...,N$, so liegt der Idealfall vor, und das Sendesignal $x(t)$ besitzt einen rein linearen Anstieg der Sendefrequenz.

Um die maximale Abweichung von diesem idealen Sendefrequenzverlauf anzugeben, wird ein maximaler relativer Linearitätsfehler als

$$\Theta := \max_{t\in[0,T_r]} \frac{\left| f(t) - f_{ideal}(t) \right|}{f_{ideal}(t)} \Bigg|_{f_0=0} = \frac{1}{m_1} \max_{t\in[0,T_r]} \left| \sum_{\ell=2}^{N} m_\ell t^{\ell-1} \right|$$

mit $f_{id}(t)=f_0+m_1 t$ für den Idealfall definiert. $\Theta$ beschreibt also eine maximale Abweichung des Momentanfrequenzverlaufs für $f_0=0$ von der linearen Funktion $f_{id}(t)|f_0=0$.

Unter Berücksichtigung des in realen Anwendungen immer vorhandenen Rauschterms $r(t)$ erhält man aus Gleichung (3) mit $q(t)=q_e(t)+r(t)$

$$q(t) = \exp\left\{ -j\frac{4\pi R}{c}\left( f_0 + \sum_{\ell=1}^{N} m_\ell t^\ell \right) \right\} + r(t) \qquad (4)$$

Wenn in Gleichung (4) das komplexwertige Rauschsignal $r(t)$ der Einfachheit halber als weiß und gaußverteilt angenommen wird, kann der Rauscheinfluß für einen hinreichend großen Signal-zu-Rauschabstand auch als Phasenrauschen $e^{j\bar{r}(t)}$ betrachtet werden, wobei $\bar{r}(t)$ reellwertig, weiß und gaußverteilt ist. Das mit der Abtastrate $T_A$ zeitdiskretisierte Phasensignal ergibt sich aus

$$\arg\{q(nT_A)\} = \phi(nT_A) = -\frac{4\pi R}{c}\left( f_0 + \sum_{\ell=1}^{N} m_\ell (nT_A)^\ell \right) + \bar{r}(nT_A) \qquad (5)$$

Ausgehend von den bekannten (empfangenen) Phasenabtastwerten $\Phi(nT_A)$ realisiert das erfindungsgemäße Verfahren eine robuste Schätzung der Polynomparameter $m_\ell$ mit $\ell=2,...,N$. In einer vorteilhaften Ausführung der Erfindung ist zusätzlich eine robuste Schätzung der unbekannten Objektentfernung $R$ möglich.

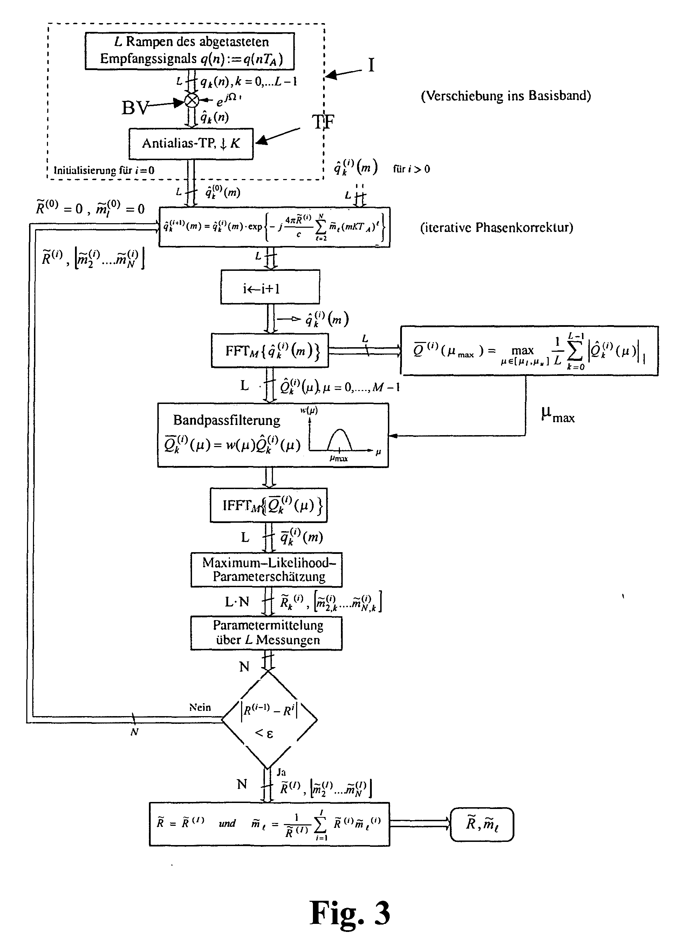

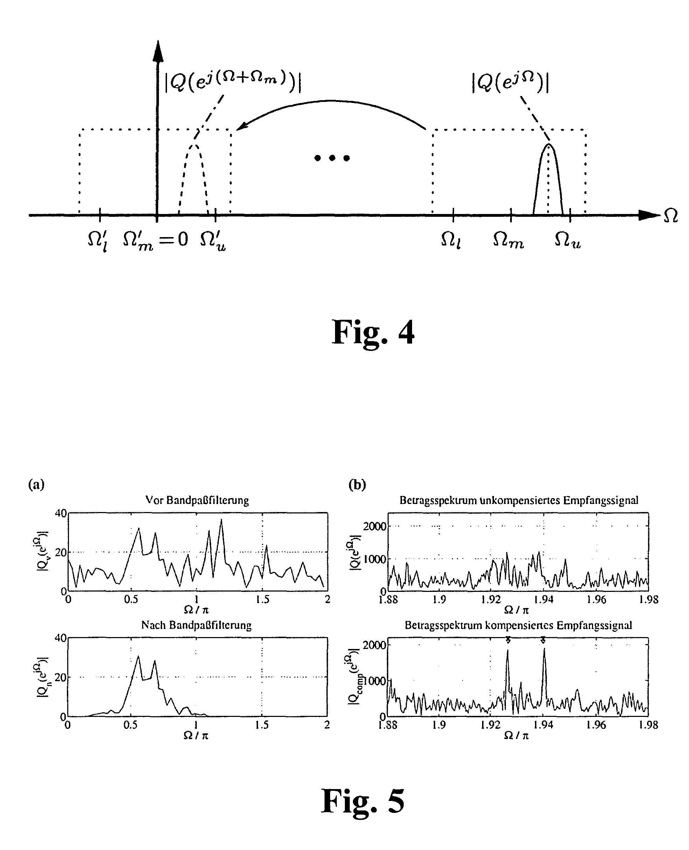

Fig. 3 zeigt ein Blockdiagramm in Form eines Ablaufschemas des erfindungsgemäßen Verfahrens. Die Initialisierung I erfolgt erfindungsgemäß durch eine Basisbandverschiebung BV von L aufeinanderfolgenden Rampen der sich aus der Gleichung (4) durch Abtastung ergebenden Folge $q(n)=q(nT_A)$. Die Verschiebung eines vorgebbaren Spektralbereichs von $Q(e^{j\Omega})=F\{q(n)\}$ ins Basisband ist in Fig. 4 beispielhaft dargestellt. Die Eckfrequenzen $\Omega_l$ und $\Omega_u$ sind beispielsweise über die Mindest- und Maximalentfernung $R_{min}$ und $R_{max}$ definiert, die durch den Einsatzzweck des FMCW-Radarsystems bestimmt sind:

$$\Omega_l = \frac{4\pi}{c} R_{min} m_1 T_A, \ \Omega_u = \frac{4\pi}{c} R_{max} m_1 T_A, \ \Omega_m = \frac{1}{2}(\Omega_u - \Omega_l)$$

Die so entstandenen Rampensignale $q_k(n)$ besitzen ein Bandpass-Spektrum. Vorteilhaft kann nach der Basisbandverschiebung und der nachfolgenden Antialias-Tiefpassfilterung TF der Abtasttakt um einen Faktor K reduziert werden. Der Faktor K liegt dabei insbesondere zwischen K=30 und K=60. Dadurch ergeben sich Vorteile hinsichtlich einer Aufwandsreduktion aller weiterer Teiloperationen.

Der weitere Verlauf des Blockdiagramms in Fig. 3 zeigt den Ablauf der Iteration zur Berechnung eines Korrekturphasenterms zur Teilkompensation von nichtlinearen Frequenzanteilen in den Basisband-Empfangsfolgen $\hat{q}_k^{(i)}(m)$ mit m als Zeitindex nach Taktreduktion. In den weiteren Verfahrensschritten wird mit $\hat{q}_k^{(i)}(m)$ eine Signalfolge, deren Abtasttakt $T_A$ reduziert wurde, angenommen. Selbstverständlich sind diese Verfahrensschritte auch mit einer Folge $\hat{q}_k^{(i)}(n)$, deren Abtasttakt $T_A$ nicht reduziert wurde, durchführbar.

Innerhalb der in jeder Iteration durchlaufenden Schleife befindet sich zu Beginn vorteilhaft eine Bandpassfil-

terung der Folgen $\hat{q}_k^{(i)}(m)$, die vorteilhaft als Fensterung im Spektralbereich ausgeführt wird, wobei alle Spektralkoeffizienten außerhalb des Fensters zu Null gesetzt werden. Als Fensterfunktion kann vorteilhaft ein Hamming-Fenster verwendet werden.

Bei mehreren reflektierenden Objekten wird mittels der Bandpassfilterung das Empfangssignalspektrum eines einzigen Objekts ausgewählt. Alle anderen unerwünschten Spektren werden unterdrückt. Außerdem findet eine Unterdrückung derjenigen rauschartigen Spektralanteile statt, die nicht zum Nutzanteil gehören. Dadurch kann auch bei einem einzigen reflektierenden Objekt das SNR nach der Bandpassfilterung erhöht werden.

Zur Berechnung der Bandpassfilterung wird vorteilhaft eine Fast-Fourier-Transformation FFT der Folgen $\hat{q}_k^{(i)}(m)$ durchgeführt. Dazu werden vorteilhaft die einzelnen diskreten Fouriertransformierten $\hat{Q}_k^{(i)}(\mu)$ der Basisband-Empfangsfolgen $\hat{q}_k^{(i)}(m)$, wobei $\hat{Q}_k^{(i)}(\mu)$=FFT{$\hat{q}_k^{(i)}(m)$} für k=1,...,L ist, berechnet. Die Punktezahl M der FFT liegt typischerweise bei bis zu 1000. Bei einer vorteilhaft durchgeführten Reduktion des Abtasttakts $T_A$ und vorheriger Antialias-Tiefpassfilterung kann die FFT mit einer geringen Punktezahl M von 64 bis 256 durchgeführt werden.

In einem nächsten Iterationsschritt werden gefilterte Basisband-Empfangsfolgen $\bar{q}_k^{(i)}(m)$ mittels eines Bandpaßfilters gemäß $\overline{Q}_k^{(i)}(\mu) = w(\mu)\hat{Q}_k^{(i)}(\mu)$ mit $\overline{Q}_k^{(i)}(\mu)$=FFT{$\bar{q}_k^{(i)}(m)$} berechnet, wobei w(μ) ein vorgebbares Spektralfenster ist und μ den Bereich des Spektralfensters mit einem vorgebbaren Fenstermittelpunkt $\mu_{max}$ angibt, wobei $\mu \in [\mu_u, \mu_l]$ mit einer vorgebbaren unteren Grenze $\mu_u$ und einer vorgebbaren oberen Grenze $\mu_l$ ist. Zur Bestimmung der Position des Mittelpunkts $\mu_{max}$ des Spektralfensters werden die FFT-Betragsspektren $|\hat{Q}_k^{(i)}(\mu)|$ über die Anzahl L gemittelt und aus dem gemittelten Spektrum das Maximum gesucht gemäß:

$$\overline{Q}^{(i)}(\mu_{\max}) = \max_{\mu\in[\mu_l,\mu_u]}\frac{1}{L}\sum_{k=0}^{L-1}\left|\hat{Q}_k^{(i)}(\mu)\right|.$$

Beispielsweise ist für ein einziges reflektierendes Objekt $\mu_l$=0 und $\mu_u$=M-1. Für mehrere nichtüberlappende Objekte sind die Grenzen $\mu_l$, und $\mu_u$ derart zu wählen, dass jeweils nur die zum interessierenden Objekt korrespondierende Spektralkomponente erfasst wird.

Anschließend erfolgt vorteilhaft die Berechnung der einzelnen inversen diskreten Fouriertransformierten der gefilterten FFT-Spektren wobei

$$\bar{q}_k^{(i)}(m)=\text{IFFT}\{\overline{Q}_k^{(i)}(\mu)\} \text{ für k=1,...,L ist.}$$

In einem anschließenden Iterationsschritt werden die Entfernungen $\tilde{R}_k^{(i)}$ mittels eines Maximum-Likelihood-Schätzverfahrens geschätzt. Aus den geschätzten Entfernungen $\tilde{R}_k^{(i)}$ können die Polynomkoeffizienten $\tilde{m}_{\ell,k}^{(i}$ geschätzt werden. Anschließend werden die Entfernungen $\tilde{R}_k$ über L Empfangsfolgen $\hat{q}_k(n)$ gemittelt. In einem abschließenden Iterationsschritt wird gemäß

$$\hat{q}_k^{(i+1)}(m) = \hat{q}_k^{(i)}(m)\cdot\exp\left\{j\frac{4\pi\tilde{R}^{(i)}}{c}\sum_{\ell=2}^{N}\tilde{m}_\ell(mKT_A)^\ell\right\}$$

eine Empfangsfolge $\hat{q}_k^{(i+1)}(m)$ mit den gemittelten geschätzten Polynomkoeffizienten $\tilde{m}_\ell$ als Ausgangspunkt für eine nächste Iterationsschleife berechnet.

Die Maximum-Likelihood-Parameterschätzung erfolgt durch Anwendung des linearen Schätzers

$$\tilde{v} = \left[A^T A\right]^{-1} A^T b \qquad\qquad (6)$$

mit den Vektoren

$$\widetilde{v} = \left[\widetilde{R}f_0, \widetilde{R}m_1, \widetilde{R}m_2, \ldots\right]^T \; ,$$

$$b = \left[\Phi(0), \Phi(T_A), \Phi(2T_A), \ldots\right]^T$$

und eine Matrix A mit der Dimension $L_q$ x (N+1), wobei $L_q$ die Länge einer Folge $\overset{\wedge}{q}{}_k^{(i)}(m)$ darstellt.

Die Bestimmung der Phasenwerte $\Phi(nT_A)$ im Vektor b erfolgt mittels eines Phase-Unwrapping-Verfahrens.

Durch die Phasenkorrektur wird sukzessive ein geringerer Linearitätsfehler in der taktreduzierten Basisband-Signalfolge $\overset{\wedge}{q}{}_k^{(i)}(m)$ erreicht, was jeweils zu einer geringeren Schätzvarianz führt. Ist die Bedingung

$$\left|\widetilde{R}^{(i-1)} - \widetilde{R}^{(i)}\right| < \varepsilon$$

nach i=l Iterationen erfüllt, so lassen sich endgültige Schätzwerte $\widetilde{R}$ und $\widetilde{m}_\ell$ aus den einzelnen jeweils in der i-ten Iteration über alle L Empfangsfolgen gemittelten Zwischenergebnissen $\widetilde{R}^{(i)}$ und $\widetilde{m}_\ell^{(i)}$ berechnen gemäß:

$$\widetilde{R} = \widetilde{R}^{(I)} \quad und \quad \widetilde{m}_\ell = \frac{1}{\widetilde{R}^{(I)}} \sum_{i=1}^{I} \widetilde{R}^{(i)} \widetilde{m}_\ell^{(i)} \; , \; \ell = 2, \ldots, N \; .$$

Im Folgenden wird gezeigt, dass es mit dem erfindungsgemäßen Verfahren möglich ist, die bedingt durch den Linearitätsfehler im FMCW-Radar-Sendesignal reduzierte Spektralauflösung des abgetasteten abgemischten Empfangssignals q(n) zu rekonstruieren. Exemplarisch wird dies im Folgenden am Beispiel zweier Objekte in unterschiedlicher Entfernung gezeigt.

Ausgangspunkt ist eine quadratische Sendesignalfolge (Chirp) mit einem Linearitätsfehler von $\Theta$=5%, wobei die Simulationsparameter zu N=2, $m_2$=5*10$^{12}$, SNR=-18 dB, K=40 und M=64 gewählt werden. Für die weiteren Systemparameter gilt die folgende Aufstellung:

| Parameter | Wert |
|---|---|
| Minimal mögliche Entfernung | $R_{min}$ = 900 m |
| Maximal mögliche Entfernung | $R_{max}$ = 1100 m |
| Rampenanstiegzeit | $T_r$ = 1ms |
| Grundfrequenz | $f_0$ = 35 GHz |
| Frequenzhub | B = 100 MHz |
| Abtastfrequenz | $f_A$ = 2MHz |
| Spektralmittelung L | L = 20 |
| Spektralmittelung gesamt | 25 * L = 500 |
| Spektralfenster $w(\mu)$ | Hamming-Fenster |

Die Objekte befinden sich in den Entfernungen $R_0$=900m und $R_1$=1100m. Fig. 5 zeigt die Betragsspektren

$$\left|Q_v\!\left(e^{j\Omega}\right)\right|, \left|Q_n\!\left(e^{j\Omega}\right)\right|$$

des taktreduzierten Signals $\overset{\wedge (0)}{q}_{k}(m)$ für ein festes k=0,....,L-1 während der ersten Iteration vor (obere Darstellung in Fig. 5a) und nach (untere Darstellung in Fig. 5a) der Bandpassfilterung. Deutlich sind die gut zu trennenden Teilspektren zu erkennen, wobei das untere zum Objekt in der Entfernung $R_1$ gehörende Teilspektrum bei der Bandpassfilterung ausgewählt wird.

Die obere Abbildung in Fig. 5b zeigt den interessierenden Bereich aus dem Betragsspektrum $|Q(e^{j\Omega})|$ des Radar-Empfangssignals, der durch die Minimal- und Maximalentfernung (siehe Tabelle) festgelegt ist. Bedingt durch die Nichtlinearität im Sendesignal sind die zu den beiden Objekten korrespondierenden Frequenzlinien verschmiert und kaum zu erkennen. Mit dem durch das erfindungsgemäße Verfahren für das Objekt im Abstand $R_1$ geschätzten Parametern wird nun, wie im unteren Teil von Fig. 5b dargestellt, der diesem Signal inhärente nichtlineare Anteil kompensiert.

Ein Vergleich der Abbildungen zeigt die deutliche Erhöhung der Objektauflösung. Die kleinen Dreiecke im unteren Teil der Fig. 5b kennzeichnen die Positionen der Frequenzlinien im Betragsspektrum $|Q(e^{j\Omega})|$, die ein Sendesignal mit linearem Frequenzanstieg erzeugen würde.

## Patentansprüche

1. Verfahren zur Linearisierung von frequenzmodulierten Dauerstrich-(FMCW-) Radargeräten mit nichtlinearem rampenförmig moduliertem Sendefrequenzverlauf x(t), **dadurch gekennzeichnet, dass** im FMCW-Radargerät empfängerseitig ein Korrekturphasenterm zur Kompensation des Phasenfehlers im Empfangssignal q(t) berechnet wird.

2. Verfahren nach Anspruch 1, **dadurch gekennzeichnet, dass** die Berechnung des Korrekturphasenterms folgende Verfahrensschritte umfasst:

   - Auswählen einer vorgebbaren Anzahl L aufeinanderfolgender rampenförmiger Empfangsfolgen $q_k(n)$ des Empfangssignals mit k=1,...,L, deren Phasen arg{$q_k(n)$} jeweils als Polynom N-ter Ordnung für den Zeitindex n mit den Polynomkoeffizienten $m_\ell$ mit $\ell$=1,...,N darstellbar sind,
   - Transformieren eines jeweils vorgebbaren Spektralbereichs $Q(e^{j\Omega})$ der ausgewählten Empfangsfolgen q(n) in ein vorgebbares Basisband, wobei jeweils Basisband-Empfangsfolgen $\hat{q}_k(n)$ mit k=0,...,L-1 erzeugt werden,
   - iterative Berechnung eines Korrekturphasenterms zur Teilkompensation von nichtlinearen Frequenzanteilen in den Basisband-Empfangsfolgen $\hat{q}_k(n)$ durch Berechnung der Polynomkoeffizienten $\tilde{m}_{\ell,k}^{(i)}$ der einzelnen Basisband-Empfangsfolgen $\hat{q}_k(n)$ mittels Schätzverfahren, wobei $\hat{q}_k(n)$ die bereits iterativ phasenkorrigierten Folgen sind und wobei die Iteration abgebrochen wird, wenn eine vorgebbare Parameteränderung zwischen zwei aufeinanderfolgenden Iterationen unter einer vorgebbaren Schwelle $\varepsilon$ bleibt.

3. Verfahren nach Anspruch 2, **dadurch gekennzeichnet, dass** zur Berechnung der Polynomkoeffizienten $\tilde{m}_{\ell,k}^{(i)}$ die Entfernung $\tilde{R}_k^{(i)}$ zwischen dem das Sendesignal x(t) emittierende Radargerät und dem das Sendesignal x(t) reflektierende Objekt geschätzt wird.

4. Verfahren nach Anspruch 2 und 3, **dadurch gekennzeichnet, dass** die Iteration folgende Verfahrensschritte umfasst:

   - Berechnen der einzelnen diskreten Fouriertransformierten $\overset{\wedge (i)}{Q}_{k}(\mu)$ der Basisband-Empfangsfolgen $\overset{\wedge (i)}{q}_{k}(n)$, wobei $\overset{\wedge (i)}{Q}_{k}(\mu)$=FFT{$\overset{\wedge (i)}{q}_{k}(n)$} für k=1,...,L ist,
   - Berechnen von gefilterten Basisband-Empfangsfolgen $\bar{q}_k^{(i)}(\mu)$ mittels eines Bandpaßfilters gemäß $\bar{Q}_k^{(i)}(\mu)$ = w $(\mu)\overset{\wedge (i)}{Q}_{k}(\mu)$ , wobei w($\mu$) ein vorgebbares Spektralfenster ist und $\mu$ den Bereich des Spektralfensters mit einem vorgebbaren Fenstermittelpunkt $\mu_{max}$ angibt, wobei $\mu \in [\mu_u, \mu_l]$ mit einer vorgebbaren unteren Grenze $\mu_u$ und einer vorgebbaren oberen Grenze $\mu_l$ ist,
   - Berechnen der einzelnen inversen Fouriertransformierten $\bar{q}_k^{(i)}(n)$ der gefilterten Basisband-Empfangsfolgen $\bar{Q}_k^{(i)}(\mu)$, wobei $\bar{q}_k^{(i)}(n)$=IFFT{$\bar{Q}_k^{(i)}(\mu)$} für k=1,...,L ist,
   - Schätzen der Entfernung $\tilde{r}_k^{(i)}$ mittels eines Maximum-Likelihood-Schätzverfahrens,

- Berechnen der Polynomkoeffizienten $\widetilde{m}_{\ell,\lambda}^{(i)}$ aus den geschätzten Entfernungen $\widetilde{R}_k^{(i)}$,
- Mittelung der Polynomkoeffizienten $\widetilde{m}_{\ell,\lambda}^{(i)}$ mit $\ell=1,...,N$ über L Empfangsfolgen $\hat{q}_k$ (n) mit k=1,...,L
- Mittelung der Entfernungen $\bar{R}_k^{(i)}$ über L Empfangsfolgen $\hat{q}_k$ (n),
- Berechnen der Empfangsfolgen $\hat{q}_k^{(i+1)}$ (n) mit den gemittelten geschätzten Polynomkoeffizienten $\widetilde{m}_\ell^{(i)}$ als Ausgangspunkt für eine nächste Iteration.

5. Verfahren nach einem der vorangehenden Ansprüche, **dadurch gekennzeichnet, dass** die Iteration abgebrochen wird, wenn eine vorgebbare Anzahl I von Iterationsschritten durchlaufen wurde.

6. Verfahren nach Anspruch 4, **dadurch gekennzeichnet, dass** die Iteration abgebrochen wird, wenn die Bedingung $|R^{(i-1)} - R^{(i)}| < \varepsilon$ mit $\varepsilon$ eine vorgebbare Schwelle erfüllt ist.

7. Verfahren nach Anspruch 6, **dadurch gekennzeichnet, dass** die endgültigen Schätzwerte $\widetilde{R}, \widetilde{m}_\ell$ mittels

$$\widetilde{R} = R^{(i)}; \; \widetilde{m}_\ell = \frac{1}{\widetilde{R}^{(i)}} \sum_{i=1}^{I} \widetilde{R}^{(i)} \widetilde{m}_\ell^{(i)}$$

berechnet werden.

8. Verfahren nach einem der Ansprüche 5-6, **dadurch gekennzeichnet, dass** das Spektralfenster ein Rechteck- oder Hamming-Fenster ist.

9. Verfahren nach einem der Ansprüche 5-8, **dadurch gekennzeichnet, dass** die Position des Mittelpunkts $\mu_{max}$ des Spektralfensters dem Maximum einer durch Mittelung der Betrags-FFT der Basisband-Empfangsfolgen $|\hat{Q}_k^{(i)}(\mu)|$ über die Anzahl L erzeugten Betrags-FFT $|\hat{Q}^{(i)}(\mu_{max})|$ entspricht.

10. Verfahren nach einem der vorangehenden Ansprüche, **dadurch gekennzeichnet, dass** das Empfangssignal mit der Sendefrequenz in eine vorgebbare niedrigere Frequenzlage abgemischt wird.

11. Verfahren nach einem der vorangehenden Ansprüche, **dadurch gekennzeichnet, dass** in einem Verfahrensschritt nach der Basisbandtransformation zur Reduktion des Abtasttakts $T_A$ der Rampensignale $q_k(n)$ die Rampensignale $q_k(n)$ mittels eines Antialias-Tiefpass gefiltert werden.

12. Verfahren nach Anspruch 11, **dadurch gekennzeichnet, dass** der Faktor K um den der Abtasttakt $T_A$ reduziert wird, zwischen K=30 und K=60 liegt.

13. Verfahren nach einem der vorangehenden Ansprüche, **dadurch gekennzeichnet, dass** die Anzahl der Iterationen vorgebbar ist, insbesondere beträgt die Anzahl der Iterationen zwischen 10 und 20.

**Fig. 1**

**Fig. 2**

**Fig. 3**

**Fig. 4**

(a)

Vor Bandpaßfilterung

(b)

Betragsspektrum unkompensiertes Empfangssignal

Nach Bandpaßfilterung

Betragsspektrum kompensiertes Empfangssignal

**Fig. 5**